# EUROPEAN PATENT APPLICATION

(11) **EP 4 813 845 A1**
(43) Date of publication of application: **30.09.2026**
(21) Application number: 25166555.0
(22) Date of filing: 27.03.2025
(51) Int. Cl.: B64G 1/00, B64G 1/22, B64G 1/64

(54) **SECTION OF A SPACECRAFT AND METHOD FOR RE-ENTRY**

(71) Applicant: ArianeGroup GmbH, 82024 Taufkirchen (DE)
(72) Inventor: Goek, Sylvain, 28199 Bremen (DE)
(74) Representative: Marschall, Stefan

(57) **Abstract**

Disclosed are a section of a spacecraft having at least a lower part such as a propulsion module and an upper part such as a payload fairing, wherein the parts are adapted to be moved telescopically into one another after a payload has been released into orbit, and a method for preparation of this section for re-entry.

## Description

The invention refers to a section of a spacecraft and to a method for preparation of this section for re-entry.

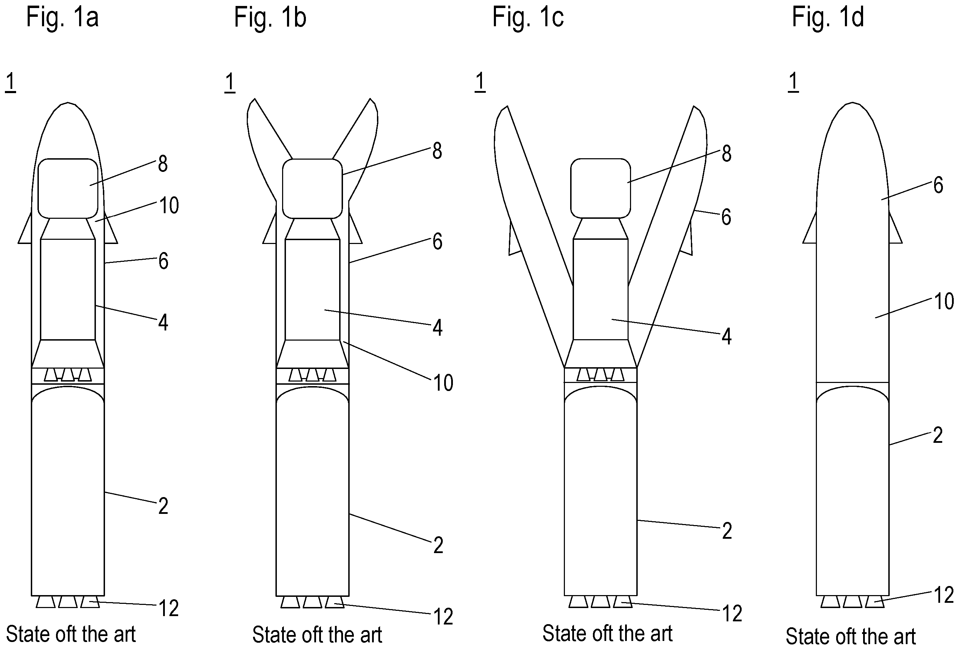

Spacecrafts as Ariane6 are commonly used to transport a payload such as a satellite from earth into orbit. The payload is received in a cargo bay at the top of the spacecraft. Whereas in the past mostly spacecrafts have been developed for single use, today there is the tendency to re-use at least some of the spacecraft stages including the cargo bay. Exemplary spacecraft stages are shown in figures 1a to 1d.

Here, two stages are shown, a lower stage 2 which should be reused. and an upper stage 4. The lower stage 2 is a propulsion module. At its top, a fairing 6 is provided forming a cargo bay 8 for the upper stage 4 and a payload 8 which is attached to the top of the upper stage 4. In such configuration, the fairing 6 is attached to the lower stage 2 at any time, including during re-entry. Via the lower stage 2, the upper stage 4 together with the payload 8, is accelerated towards the targeted orbit. Via the upper stage 4, the payload 8 is brought to its final position in orbit.

In order to release the upper stage 4, two different systems are known. According to the first system (figure 1b), the fairing 6 can be opened solely at its top. According to the second system (figure 1c) the fairing 6 can be opened over its entire axial length. After the upper stage 4 has been released into orbit, the fairing 6 is closed again and a back manoeuvre for lower stage re-entry can be initiated (figure 1d).

Both systems are very complex. With reference to the first system (figure 1b), the upper stage 4 must glide inside the fairing 6 before reaching the exit and separate from the lower stage 2. Due to the heavy mass of the upper stage 4 (fully loaded with propellants), a complex gliding mechanism is required. With reference to the second system (figures 1c), due to the size of the fairing 6, panels of the fairing 6 must widely open to avoid colliding with the upper stage 4 during distancing. The opening mechanism is complex for very large panels. In addition, both systems require a long ballistic phase. With reference to the first system (figures 1b), at separation of the upper stage 4, extinction of lower engines 12 is needed to allow the upper stage 4 to glide inside the fairing 6, without adverse acceleration. This leads to a long ballistic phase, detrimental for the performance. With reference to the second system (figures 1c), at separation of the upper stage 4, extinction of lower stage engines 12 is needed to allow the large panel surfaces opening safely, without inertia loads. This leads to a long ballistic phase, detrimental for the performance. Further on, both systems show the drawback that due to the global length of the vehicle during re-entry (see Figure 1d) there is a high mechanical load on the lower stage at re-entry which can lead to bending of the lower stage 2. In addition, the complete external surface of the lower stage 2 is subjected to aerothermal loads and needs a hot thermal protection.

It is an object of the present invention to provide an improved reusable section of a spacecraft and a method for preparation of this section for re-entry.

The object is achieved by a section with the features of claim 1 and by a method with the features of claim 8. Advantageous embodiments are disclosed in the dependent claims, the description and the figures.

According to the invention, a section of a spacecraft for transporting a payload into orbit, comprises a lower part for receiving a propulsion system for propulsion purposes and an upper part forming a cargo bay for the payload on the top of the lower part. Both parts can be telescopically moved into one another. The lower part is, for instance, a stage of a spacecraft and the upper part can be a payload fairing. However, both parts can also be considered as a single stage. It should be noted that the term "section" is not limited to single stage or a stage at all.

According to the invention, the total length can be reduced before re-entry by moving the parts into each other. In particular, the upper part is rectracted towards the lower part. This leads two several advantages such as less complexity, shorter ballistic phase, reduced mechanical load and a reduced thermal protection. Once the upper part is retracted, the payload separation can be performed without great difficulty. Since the upper part is much lighter than the payload (and an upper stage which is located inside the cargo bay for transporting the pay load to its final position in orbit), it is easier to move the upper part than the upper stage. We can also use the launcher acceleration as driving force to retract the fairing backwards, which is not the case when moving the upper stage forwards. A ballistic phase is not requested for the gliding of the upper part towards the lower part. Indeed, it is possible to perform this operation while some of the lower part engines are still burning (reduced thrust may be considered). The inertia force induced by the acceleration will help to move the upper part towards the lower part. Therefore, the ballistic phase is reduced to a minimum for the separation (a ballistic duration may still be requested during distancing of the upper stage, until ignition of the upper stage engines) and the launcher performance is improved. After separation of the payload (upper stage equipped with the payload), the upper part remains in retracted position on the lower part. In such configuration, the overall length of the spacecraft section is significantly reduced. This decreases the (bending) loads acting on the stage during re-entry.

Preferably, the upper part is adapted to be moved along the outside of the lower part. By means of this, thermal protection of the lower part is achieved as the upper part acts as a kind of heat shield. After the separation of the payload, the upper part remains in retracted position on the lower part. In such configuration, the surface area covered by the upper part is protected from the aerothermal loads and does not need a hot thermal protection. Additionally, it is much easier to move the upper part over the lower part as the cargo bay is empty. In order to reduce any friction between the outer side of the lower part and the inner side of the upper part during retracting, a slide mechanism can be provided. Further on the slide mechanism ensures appropriate coaxiality and clearance between the upper and lower parts. Such mechanism typically involves rails, gutters, wheels, springs and the like distributed over the circumference.

In particular, the upper part can have an openable and closable top portion and a lower pipe-like portion. By means of this a reduced opening and closing mechanism is needed and the upper part has a high stability.

Preferably, the top portion comprises several panels each of them is pivotable around a pivot axis. Typically, two to four panels are provided separating from each other in "petal mode". It should be noted that also three, five panels and the like can be provided. The more panels are provided, the higher is the complexity. Even a single cap-like panel seems to be appropriate as long as a collision between the payload and the single cap-like panel is prevented.

In order to avoid collision of the panels with the payload during retracting, a panel mechanism can be provided and adapted to synchronise the movement of the upper part relative to lower part with an opening movement of the panels. The panel mechanism of the panel is reversible, so that the upper part can be closed after releasing the upper stage.

In order to keep free access to the engines of the lower part in a retracting state and/or to landing legs which need to deployed for landing, the pipe-like portion has a shorter axial extension than the lower part.

By means of a control mechanism the velocity of the upper part during retraction can be controlled. The control mechanism can be a passive device such as pistons (in the form of telescopic cylinder assemblies) distributed axially over the circumference and subject to compression as the upper part is pushed against the lower part. During compression, gas enclosed in the piston is exhausted to the outside through a flow control valve. Each piston can have its own control valve in order to regulate the depletion rate of each piston separately. Hence, it is possible to control the overall speed of the upper part motion, but also to correct any undesirable rotation/tilting of the upper part just by adjusting the exhaust flow of the individual pistons on the circumference. As alternative, an active device can be used to drive the upper part such as an electrical motor, a pneumatic actuator, etc. In that case, the active device includes the control mechanism. Further on or additionally, in order to keep the upper part in its final retracted position on the lower part, a locking mechanism can be provided. The locking mechanism can be activated once the upper part has reached its final position (retracted configuration). The locking mechanism holds the upper part on the lower part. The locking mechanism can be located at the bottom of the lower part, at the top of the lower part or at both locations (depending on the mechanical analysis). The locking mechanism is capable of transmitting the inertia and aerodynamic loads acting during re-entry.

According to an inventive method for preparing a section of a spacecraft to re-entry from orbit into atmosphere, a lower part of the section is received at least partially in an empty cargo bay of an upper part of the section. The parts are pushed telescopic into each other, thus reducing the axial length of the section facilitating its re-entry into atmosphere.

Preferably, during a retraction of the upper part towards the lower part the upper stage carrying the payload is released into orbit. By means of this, two action are executed simultaneously, this shorten the overall operation time when the payload (upper stage with the payload) is released and at the same time, the section is prepared for its re-entry such that a back manoeuvre can start directly after the exit of the payload/upper stage with the payload into orbit.

In order to move the fairing towards the lower part, a driving force is necessary. When the engines of the propulsion system of the lower part are used for the retracting of the upper part, auxiliary engines can be omitted. The retracting/driving force is provided by inertia, as some of the lower part engines are still burning (thrust to be adapted as necessary, to get appropriate acceleration on the upper part). In this condition, no active device is needed to drive the retraction motion.

In what follows, preferred embodiments of the present invention are explained with respect to the accompanying drawings. As is to be understood, the various elements and components are depicted as examples only, may be facultative and/or combined in a manner different than depicted. Reference signs for related elements are used comprehensively and not necessarily defined again for each figure. Shown is schematically in
Figures 1a to 1d: a section of a spacecraft known from prior art
Figure 2: a section of a spacecraft according to the invention before releasing a payload;
Figure 3: a section of a spacecraft according to the invention during releasing the payload;
Figure 4: a section of a spacecraft according to the invention after releasing the payload and ready for re-entry;
Figure 5: a detailed functional view of an inventive retracting of an upper part of the section in a medium position; and
Figure 6: a detailed functional view of an inventive retracting of an upper part of the section in a final retracted position;

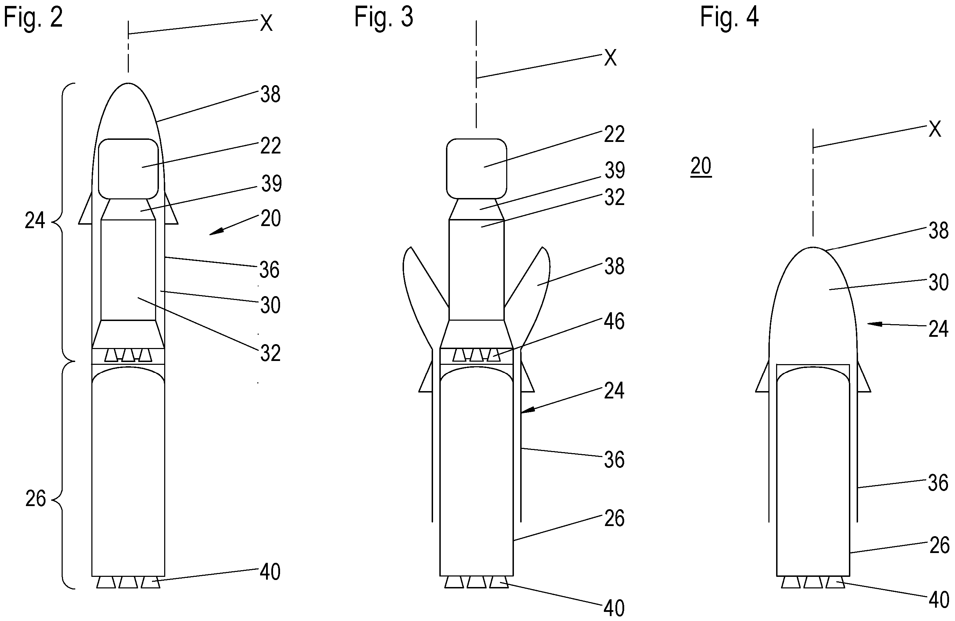

In Figure 2 a section 20 of a spacecraft is shown in its ascend phase (initial configuration). The spacecraft is in this embodiment a launcher in order to transport the payload 22 such as satellites from earth into orbit. In the shown embodiment, the section 20 is a lower stage 26 of the spacecraft with an integrated payload fairing 24. Below the lower stage 26, an additional stage could be placed.

The section 20 comprises a lower part and an upper part. The lower part 26 receives a propulsion system for propulsion purposes. The upper part 24 is the payload fairing 38 forming a cargo bay 30 for the payload 22 on the top of the lower part 26.

Inside the cargo bay 30, the payload 22 and an upper stage 32 are arranged. The payload 22 is attached to the top of the upper stage 32. The upper stage 32 is provided to bring the payload 22 to its final position in orbit. It comprises a propulsion system also and at its top a carrier ring 39 for attaching the payload 22 to it.

With reference to figure 3 (releasing) and figure 4 (retracted configuration), the upper part 24 (fairing) is described.

The fairing 24 comprises a tube-like lower portion 36 and an openable and closable top portion 38.

The tube-like lower portion 36 has an inner diameter that is bigger than an outer diameter of the lower part 26 of the section 20. An axial length (extension in longitudinal x direction of the section 20) of the tube-like portion 36 is shorter than an axial length of the lower part 26.

The top portion 38 comprises several panels which can be moved relatively to each other such that the cargo bay 30 can be opened and closed again. For instance, two to five panels are provided.

According to the retractable fairing concept of the invention, the fairing 24 can be moved co-axially along the lower part 26. In particular, the parts 24, 26 can be telescopically moved into one another in such a way that the fairing 24 is retracted towards the lower part 26. As a consequence, the axial length of the section 20 during re-entry into the atmosphere is shorter than its axial length during ascent and entering into orbit. In its final retraction configuration, the lower part 26 is positioned mostly inside the empty cargo bay 30. Due to the shorter axial length of the tube-like portion 36 compared with the axial length of the tube-like portion 36, engines 40 of its propulsion system keep fully accessible. Preferably, driving forces for retracting the fairing 24 (retraction forces) are provided by the engines 40 of the propulsion system of the lower part 26.

In order to avoid any unintentional opening of the top portion 38 a not shown first locking mechanism located at the top of the tube-like lower part 36 is provided. The locking mechanism is capable of transmitting inertia and aerodynamic loads.

In order to keep the fairing 24 in its final retracted position (retracted configuration) on the lower part 26, a second locking mechanism is implemented. The second locking mechanism is located at the bottom of the lower part 26, at the top of the lower part 26 or at both locations. The position depends on mechanical analysis. The second locking mechanism is capable of transmitting the inertia and aerodynamic loads acting during re-entry.

In order to open and close the cargo bay 32, a not shown panels mechanism is provided. The deployment of the panels is synchronized with the retraction of the fairing 24 in such a way to avoid collision of the panels with the payload 22. The panel mechanism is reversible, so that the fairing 24 can be closed after releasing the upper stage 32 carrying the payload 22.

In order to minimize friction between the tube-like portion 36 of the fairing 24 and the lower part 26 and to ensure appropriate coaxiality and clearance between them, a not shown sliding mechanism is provided. Such sliding mechanism can involve rails, gutters, wheels and springs etc. which are distributed over the inner circumference of the tube-like portion 36.

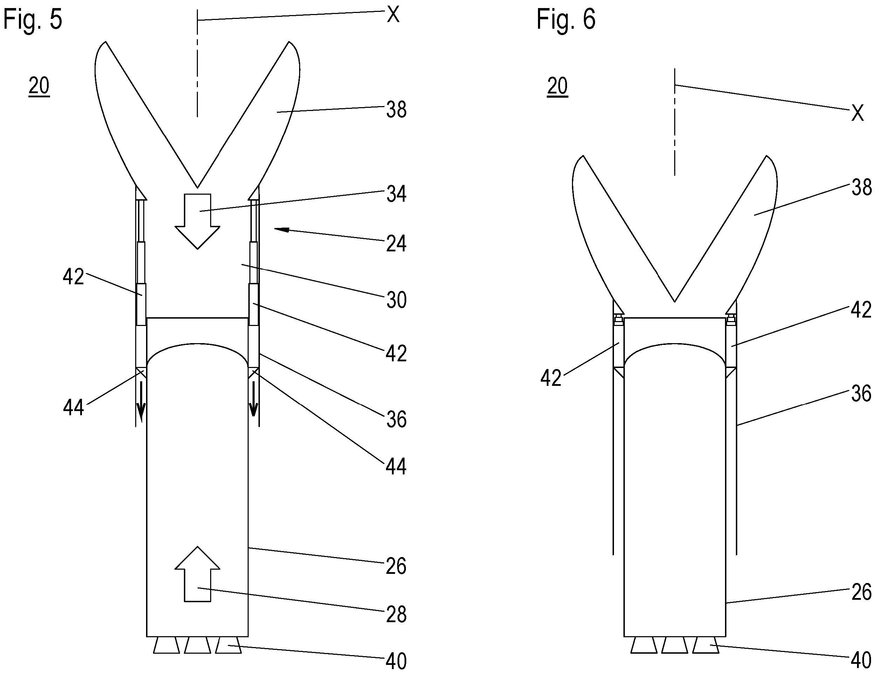

In order to control the velocity of the retraction motion of the fairing 24, a control mechanism is provided. An exemplary control mechanism is shown in figures 5 and 6.

In the shown embodiment, the control mechanism is passive and comprises pistons 42 in the form of telescopic cylinder assemblies. The pistons 42 are distributed axially over the inner circumference of the tube-like-portion. They are subject to compression as the fairing 24 is pushed against the lower part 26. During compression, the gas enclosed in the piston 42 is exhausted to the outside into space vacuum through a flow control valve 44. Each piston 42 has its own control valve 44 in order to regulate the depletion rate of each piston separately. Hence, it is possible to control the overall speed of the fairing motion, but also to correct any undesirable rotation or tilting of the fairing 24 just by adjusting the exhaust flow of the individual pistons 42 on the circumference.

In the following, a preferred sequence of events is mentioned:
- In the ascend phase, the section is in its initial fairing configuration (figure 2). All engines 40 of the lower part 26 burn.
- In order to prepare the separation of the upper stage 32, i.e. releasing the payload 22 out of the cargo bay 30, the thrust (arrow 28) of engines 40 of the lower part 26 is reduced. For instance, the section 20 acceleration is reduced to around 1g-acceleration)
- Then, the panels of the top portion 38 are deployed and the fairing 24 is retracted (arrow 34) toward the lower part 26 until its final retraction position is reached via inertia (figures 3, 5 and 6).
- After that, all engines 40 of the lower part 26 are switched off such that no further thrust is applied to the section 20 any longer.
- Now, the upper stage 24 with the payload 22 is separated and is distanced from the section 20 via appropriate devices such as known separation and distancing devices.
- After distancing, engines 46 of the upper stage are ignited
- Finally, the fairing 24 is closed (figure 4).
- In order to initiate a back manoeuvre, the engines 40 of the lower part 26 are re-ignited.
- In the descent phase, due to the retraction of the fairing 24 (retracted configuration) the axial length of the section 20 is shortened compared to the ascent phase by the length of the tube-like portion 36 (figures 4 and 2).

However, it should be noted that the section 20 can also be the entire spacecraft or a sub-section of a larger spacecraft. In such a case boosters could be placed on the lower part 26 which does not affect the retraction of the upper part (here: fairing 24). Disclosed are a section of a spacecraft having at least a lower part such as a propulsion module and an upper part such as a payload fairing, wherein the parts are adapted to be moved telescopically into one another after a payload has been released into orbit, and a method for preparation of this section for re-entry.

### Reference signs

### Prior art

- 1: section of a spacecraft
- 2: lower stage
- 4: upper stage
- 6 12: fairing
- 8: payload
- 10: cargo bay lower engine

### Invention

- 20: section of a spacecraft (here: lower stage with payload fairing)
- 22: payload
- 24: upper part (here: payload fairing / fairing)
- 26: lower part
- 28: thrust of engines of propulsion system of lower part
- 30: cargo bay
- 32: upper stage
- 34: retraction of upper part
- 36: tube-like lower portion
- 38: top portion
- 39: carrier ring
- 40: engines of propulsion system of lower stage
- 42: piston / telescopic cylinder assembly
- 44: flow control valve
- 46: engines of propulsion system of upper stage

- X: longitudinal axis of the section

## Claims

1. Section (20) of a spacecraft for transporting a pay load (22) into orbit, comprising
• a lower part (26) for receiving a propulsion system for propulsion purposes; and
• an upper part (24) forming a cargo bay (30) for the payload (22) on the top of the lower part (26),
wherein the parts (24, 26) can be telescopically moved into one another.

2. Section according to claim 1, wherein the upper part (24) is adapted to be moved along the outside of the lower part (26).

3. Section according to claims 1 or 2, wherein the upper part (24) has an openable and closable top portion (38) and a lower pipe-like portion (36).

4. Section according to claim 1, wherein the top portion (38) comprises several panels.

5. Section according to claim 4, wherein a panel mechanism is provided and adapted to synchronise a movement of the upper part (24) relative to lower part (26) with an opening movement of the panels.

6. Section according to claims 3 or 4, wherein the pipe-like portion (36) has a shorter axial extension than the lower part (26).

7. Section according to any of the preceding claims, wherein a control mechanism is adapted to control a velocity of the upper part (24) during movement relative to the lower part (26).

8. Method for preparing a section (20) of a spacecraft to re-entry from orbit into atmosphere, wherein a lower part (26) of the section is received at least partially in an empty cargo bay (30) of an upper part (24) of the section (20).

9. Method according to claim 8, wherein during a retraction of the upper part (24) towards the lower part a payload (22) is released into orbit.

10. Method according to claim 8 or 9, wherein the retracting force is applied by engines (40) of the propulsion system.
